# EUROPEAN PATENT APPLICATION

(11) **EP 2 154 932 A1**
(43) Date of publication of application: **17.02.2010**
(21) Application number: 08867277.9
(22) Date of filing: 17.12.2008
(51) Int. Cl.: H04W 88/18

(54) **SERVICE INFORMATION CONVERSION METHOD AND SYSTEM**

(30) Priority: 17.12.2007 CN 200710179735
(71) Applicant: Huawei Technologies Co., Ltd., Longgang District Shenzhen Guangdong 518129 (CN)
(72) Inventor: QI, Hailong c/o Huawei Technologies Co.Ltd., Longgang District 518129, Shenzhen (CN)
(74) Representative: Kreuz, Georg Maria
(86) International application number: PCT/CN2008/073557
(87) International publication number: WO 2009/082932

(57) **Abstract**

A method and a system for converting service information are provided. The method includes the following steps. Service information is received. Contents of the service information are identified, and contents to be converted in the service information are obtained. A content conversion rule corresponding to the contents to be converted is obtained according to the preset information of a mapping relation between the contents to be converted and the content conversion rule. The contents to be converted are converted into multimedia contents according to the content conversion rule. A multimedia message (MM) is generated from the multimedia contents and the remaining contents in the service information according to a preset format. A playback property of the MM is set. An MM to be sent is generated. Therefore, a short message (SM) may be converted into an MM, so that an expression manner of SM contents is effectively enriched. Also, the MM content in the prior art may be converted into a richer and more vivid MM, thus realizing the personalized conversion of an SM or an MM.

## Description

### FIELD OF THE TECHNOLOGY

The invention relates to the communication field, and more particularly, to a method and a system for converting service information.

### BACKGROUND OF THE INVENTION

In the conventional art, in order to express contents of a short message (SM) vividly, when a sender sends an SM to a receiver, an access code for converting an expression manner of SM contents is added in front of a receiver identification (receiver ID). An SM forwarding system sends the SM requiring the conversion of the expression manner of SM contents to an SM conversion platform. The SM conversion platform converts some text contents in the SM into simple American standard code for information interchange (ASCII) characters or graphics according to a preset conversion rule. The SM forwarding system then sends the converted SM to the receiver.

However, the following problems exist in the conventional art.

In the conventional art, when the SM contents are converted, the SM format is not converted. The converted message is still an SM. Due to limits such as an SM content size and ASCII character set capacity, a conversion manner of SM contents and an expression manner of converted contents are still limited. As a result, the expression manner of the SM contents is unable to be effectively enriched.

In the conventional art, conversion of an expression manner of SM contents may be realized. The conversion of an expression manner of multimedia message (MM) contents is still unable to be realized.

### SUMMARY OF THE INVENTION

It is the object of the invention to solve the technical problems of converting an expression manner of service information contents and effectively enriching the expression manner of the service information contents.

The disclosure provides a method for converting service information, which includes the following steps.

Receiving service information.

Identifying contents of the service information and obtaining contents to be converted in the service information.

Obtaining a content conversion rule corresponding to the contents to be converted according to a preset mapping relation between the contents to be converted and the content conversion rule.

Converting the contents to be converted into multimedia contents according to the content conversion rule.

Generating a multimedia message (MM) is generated from the multimedia contents and the remaining contents in the service information according to a preset format, and setting a playback property of the MM to generate an MM to be sent.

The disclosure further provides a service-information conversion system, which includes a content identification device and a content processing device.

The content identification device is adapted to identify contents of service information and obtain contents to be converted in the service information.

The content processing device is adapted to query a preset mapping relation between the contents to be converted and a content conversion rule, obtain the content conversion rule corresponding to the contents to be converted, convert the contents to be converted into multimedia contents according to the content conversion rule, generate an MM from the multimedia contents and the remaining contents in the service information according to a preset format, and set a playback property of the MM to generate an MM to be sent.

Therefore, the contents to be converted in the service information and a corresponding content conversion rule are obtained from the contents of service information such as a short message (SM) or an MM. The contents to be converted in the service information are converted into multimedia contents according to the content conversion rule. An MM is generated from the multimedia contents and the remaining contents in the service information. Thus, an SM is converted into an MM. The format of the transmitted Information is no longer limited to an SM format, and the expression manner of SM contents is effectively enriched. In addition, the conversion of an expression manner of MM contents may be further realized, so that the MM contents in the conventional art may be converted into a richer and more vivid MM.

### BRIEF DESCRIPTION OF THE DRAWINGS

FIG. 1 is a schematic flow chart of a first embodiment of a method for converting service information according to the invention;
FIG. 2 is a schematic flow chart of a second embodiment of a method for converting service information according to the invention;
FIG. 3 is a schematic structural diagram of a first embodiment of a system for converting service information according to the invention;
FIG. 4 is a schematic structural diagram of a second embodiment of a system for converting service information according to the invention;
FIG. 5 is a schematic structural diagram of a third embodiment of a system for converting service information according to the invention;
FIG. 6 is a schematic structural diagram of a fourth embodiment of a system for converting service information according to the invention; and
FIG. 7 is a schematic structural diagram of a fifth embodiment of a system for converting service information according to the invention.

### DETAILED DESCRIPTION OF THE EMBODIMENTS

The specific embodiments of the invention are further illustrated in detail in the following with reference to the accompanying drawings.

In the embodiment of the invention, after service information is received, contents of the service information are identified, and contents to be converted in the service information are obtained. A content conversion rule corresponding to the contents to be converted in the service information is then obtained according to a preset mapping relation between the contents to be converted and the content conversion rule. The contents to be converted in the service information are converted into multimedia contents according to the content conversion rule. A multimedia message (MM) is generated from the multimedia contents and the remaining contents in the service information according to a preset format. A playback property of the MM is set to generate an MM to be sent. The service information may be a short message (SM) or an MM. Not only an SM may be converted into an MM, but also the MM may be converted into an MM with a richer and more vivid expression manner, so that the expression manner of the service information contents is effectively enriched. In an SM, contents to be converted may specifically include keywords in the SM. In the embodiment of the invention, the forwarding-related information of the SM may be the forwarding-related information of the SM sender to the SM, such as, the total number of times that the SM sender forwards the SM, the number of times that the SM sender forwards the SM in a certain period, and the total number of times that the SM is forwarded.

In the MM, specifically, MM contents may be identified according to content identifying information carried in the MM. The content identifying information may be specifically watermark information and/or fingerprint information. In the embodiment of the invention, the forwarding-related information of the MM may be the total number of times that the MM is forwarded, and/or the total number of times that the MM is forwarded by an MM sender and/or the number of times that the MM is forwarded by the sender or all users in a certain period of time.

Specifically, a content identification device may identify contents of received service information and obtain contents to be converted in the service information. A forward analysis device obtains forwarding-related information of the service information according to the contents to be converted obtained by the content identification device. A content processing device obtains a content conversion rule corresponding to the contents to be converted and the forwarding-related information according to a mapping relation between the contents to be converted, the forwarding-related information and the content conversion rule. The content processing device then converts the contents to be converted in the service information into multimedia contents according to the content conversion rule, and generates an MM to be sent.

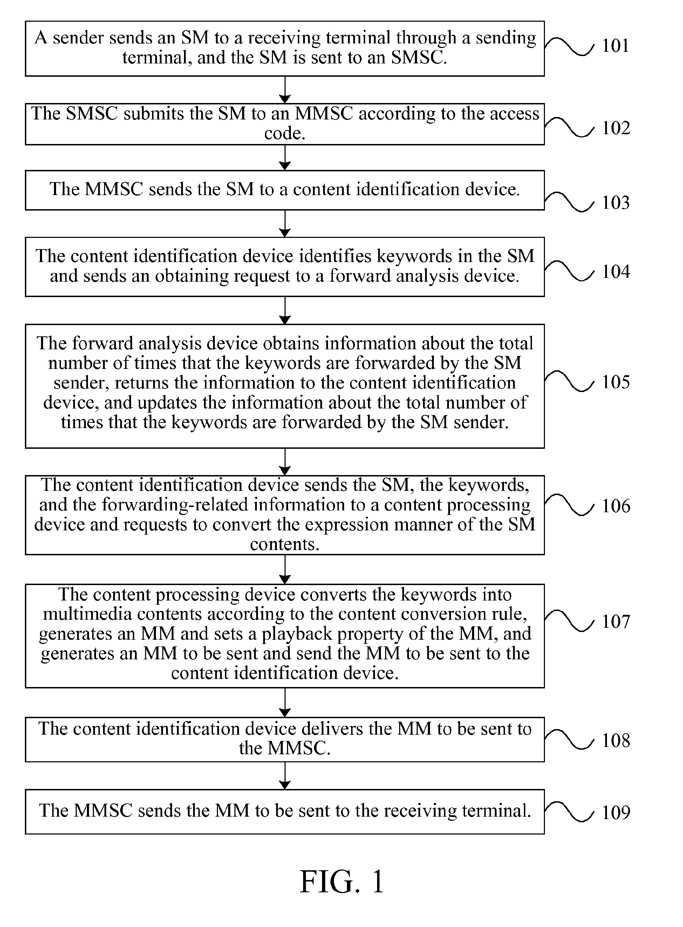

FIG. 1 is a schematic flow chart of a first embodiment of a method for converting a service-information according to the invention. In this embodiment, an SM may be converted into an MM. The method includes the following steps.

In step 101, a sender sends an SM to a receiving terminal through a sending terminal. The SM is sent to an SM service center (SMSC). An access code for converting an expression manner of the contents is carried in front of a receiver identification (receiver ID) in the SM.

When the sender is sending an SM, a string of access codes for converting an expression manner of the contents is added in front of the receiver ID. For example, the receiver ID is "13901234567". The sender adds an access code "18601" in front of the receiver ID "13901234567". The receiver ID added with the access code, that is, "1860113901234567", serves as a reception destination number. In addition, when the sender is editing the SM contents, a preset separator or other symbols may be used to separate the keywords to be converted and other contents, so as to facilitate subsequent conversion and identification. For example, when a sender edits an SM, "Susan, let me send you a # rose ## you are my rose#", the first keyword to be converted is "rose", and the second keyword to be converted is "you are my rose".

In step 102, when the SMSC receives the SM, the SM is submitted to an MM service center (MMSC) according to the access code.

In step 103, the MMSC sends the SM to a content identification device.

In step 104, the content identification device identifies the keywords in the SM. After the keywords are successfully identified, an obtaining request is sent to a forward analysis device 401 to obtain forwarding-related information of the SM from the forward analysis device, for example, the total number of times that the keywords "rose" and "you are my rose" are forwarded by the SM sender.

When the content identification device identifies the keywords, if the keywords are separated from other content by the preset separator or other symbols, the keywords are identified according to the separator or the other symbols. If the separator or other symbols are not preset, the content identification device may automatically identify keywords to be converted in the SM according to the predefined convertible keywords.

In step 105, the forward analysis device obtains information about the total number of times that the keywords "rose" and "you are my rose" are forwarded by the SM sender according to forwarding records, and returns the information to the content identification device. At the same time, the information about the total number of times that the keywords "rose" and "you are my rose" are forwarded by the SM sender is updated for subsequent use.

For example, the forward analysis device learns that the keywords "rose" and "you are my rose" are forwarded by the SM sender for 25 times in total according to the SM forwarding records.

In step 106, the content identification device sends the SM, the keywords, and the forwarding-related information of the SM to a content processing device, so as to request to convert the expression manner of the SM contents. The SM contents in this embodiment are the keywords in the SM.

In step 107, the content processing device queries a mapping relation between the preset keywords, forwarding-related information and a content conversion rule, obtains the content conversion rule corresponding to the received keywords and forwarding-related information, converts the keywords into multimedia contents according to the content conversion rule, generates an MM from the multimedia contents and the remaining contents in the SM according to a preset format, and sets a playback property of the MM. The playback property of the MM is a display property of the MM, that is, a playback or display sequence, a display mode, a display format, and the like of all parts of contents in the MM. An MM to be sent is generated and then the MM is sent to the content identification device.

For example, according to a preset content conversion rule, when the keyword "rose" is forwarded by the same user terminal for less than 10 times, the "rose" is converted into a picture of a rose. When the keyword "rose" is forwarded by the sending terminal for more than 10 times, the "rose" is converted into a picture of a bunch of roses. When the keyword "rose" is forwarded by the same user terminal for 20-30 times, the "rose" is converted into a picture of 3 roses. When the keyword "you are my rose" is forwarded by the same user terminal for less than 10 times, the wording "you are my rose" is converted into a piece of music with the same name, and the music is used as background music for the converted MM. When the keyword "you are my rose" is forwarded by the same user terminal for 20-30 times, the wording "you are my rose" is converted into a great clip of the music with the same name, and the music of the great clip is used as background music of the converted MM repeatedly. According to the example in step 105, the content processing device converts the keyword "rose" in the SM into a picture of 3 roses, and converts the "you are my rose" into the great clip of the music with the same name. According to the preset format, a video part of the MM is generated from the wording "Susan, let me send you a" and the picture of 3 roses. The music of the great clip with the music same name "you are my rose" is used as background music for the MM video part repeatedly, and a playback property of the MM is set that the video part and the background music are to be synchronously played. Finally, an MM to be sent is generated.

In step 108, the content identification device delivers the MM to be sent to the MMSC.

In step 109, the MMSC sends the MM to be sent to the receiving terminal.

In this embodiment, the keywords to be converted and the forwarding-related information of the keywords are obtained according to the SM. The corresponding content conversion rule is obtained according to the keywords and the forwarding-related information of the keywords. The keywords are converted into multimedia contents according to the content conversion rule. An MM is further generated from the multimedia contents and the remaining contents in the SM. Therefore, the expression manner of the SM contents is effectively enriched, so that the expression manner of the SM becomes more vivid and the SM becomes more interesting. Also, the keywords are converted according to the forwarding-related information, thus realizing the personalized conversion of the expression manner of the SM contents.

In addition, before step 101, the method further includes presetting and storing a mapping relation between the keywords, the forwarding-related information and the content conversion rule.

In addition, in the embodiment shown in FIG. 1, in step 102, after the SMSC receives the SM, the SM may also be directly sent to the content identification device according to the access code, and/or in step 107, after the content processing device generates the MM to be sent, the MM to be sent may also be sent to the MMSC, and the MMSC then sends the MM to be sent to the receiving terminal.

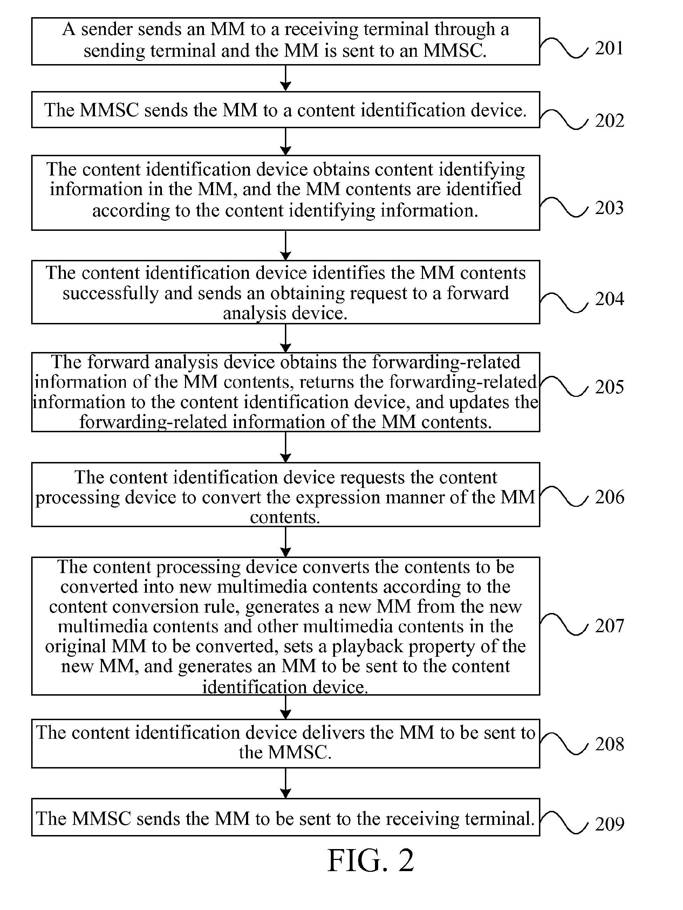

FIG. 2 is a schematic flow chart of a second embodiment of a method for converting service information according to the invention. In this embodiment, the MM may be converted into an MM with a more vivid and richer expression manner. The method includes the following steps.

In step 201, a sender sends an MM to a receiving terminal through a sending terminal. The MM is sent to an MMSC.

In step 202, the MMSC sends the MM to a content identification device.

In step 203, the content identification device obtains content identifying information carried in the MM. The content identifying information is adapted to identify the MM contents. Specifically, the content identifying information may be watermark information and/or fingerprint information. The MM contents are identified according to the content identifying information. For subsequent convenience, the content of the MM may be a preset content identification (content ID).

In step 204, the content identification device identifies the MM contents successfully, and sends an obtaining request to a forward analysis device to obtain the forwarding-related information of the MM contents from the forward analysis device.

In step 205, the forward analysis device obtains the forwarding-related information of the MM contents according to the forwarding records, returns the forwarding-related information to the content identification device, and updates the forwarding-related information of the MM contents for subsequent use at the same time.

In step 206, the content identification device sends the MM, the contents to be converted in the MM, and the forwarding-related information of the MM to the content processing device, so as to request the content processing device to convert the expression manner of the MM contents.

In step 207, the content processing device queries a preset mapping relation between the contents to be converted, the forwarding-related information and a content conversion rule, obtains the content conversion rule corresponding to the received contents to be converted and the forwarding-related information, converts the contents to be converted into new multimedia contents according to the content conversion rule, generates a new MM from the new multimedia contents and other multimedia contents in the original MM to be converted according to a preset format, sets a playback property of the new MM, and generates an MM to be sent with a richer and more vivid expression manner and sends the MM to the content identification device.

If the contents to be converted have a corresponding content ID, the information about the mapping relation records the mapping relation between the content ID, the forwarding-related information and the content conversion rule.

In step 208, the content identification device delivers the MM to be sent to the MMSC.

In step 209, the MMSC sends the MM to be sent to the receiving terminal.

In this embodiment, the contents to be converted in the MM are obtained through the content identifying information, such as watermark information or fingerprint information, carried in the MM, and the content conversion rule is determined in combination with the forwarding-related information of the contents to be converted, so as to realize conversion and personalized conversion of the expression manner of the MM contents. Also, the MM may also be converted into an MM with a richer and more vivid expression manner, so as to make the MM more interesting.

In this embodiment, before step 201, a service provider may formulate multimedia contents of which an expression manner may be converted, that is, the above mentioned contents to be converted, and sends the contents to be converted to the content processing device. The service provider may also formulate a mapping relation between the contents to be converted, the forwarding-related information and the content conversion rule, and stores the mapping relation in a storage device for subsequent conversion of the contents to be converted. The content processing device sends the contents to be converted to a preprocessing device. The preprocessing device pre-processes the contents to be converted and adds content identifying information in the contents to be converted, such as watermark information and/or fingerprint information, in the contents to be converted, so that the multimedia contents can be successfully identified in the subsequent process. The content identifying information can be written in the multimedia contents and subsequent identification can be performed through the watermark technology and fingerprint technology. In the watermark technology, some information is inserted in multimedia contents by utilizing information redundancy in the multimedia contents. In the fingerprint technology, important feature information for the contents to be identified is extracted by analyzing the multimedia contents. During the content identification, the multimedia contents are identified according to whether the feature information extracted twice matches each other or not.

After the service provider formulates the multimedia contents of which an expression manner may be converted, the service provider releases the multimedia contents through a publishing device for the user to select and send.

Similarly, in the embodiment shown in FIG. 2, in step 207, after the content processing device generates the MM to be sent, the MM to be sent may also be sent to the MMSC, and the MMSC sends the MM to be sent to the receiving terminal.

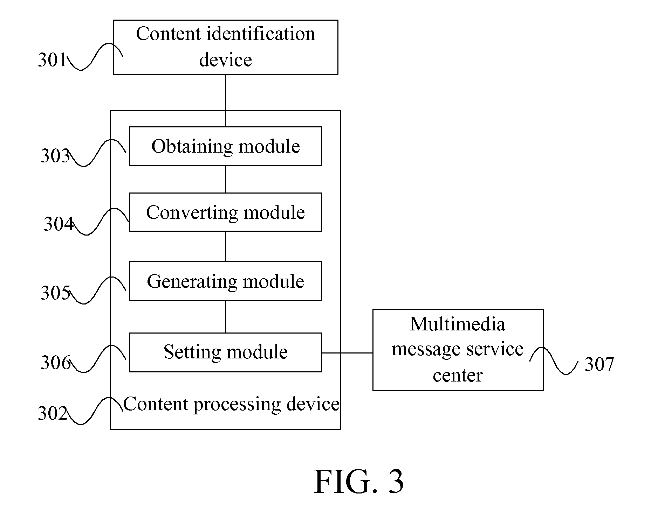

FIG. 3 is a schematic structural diagram of a first embodiment of a system for converting service information according to the invention. In this embodiment, the system for converting service information includes a content identification device 301 and a content processing device 302. The content identification device 301 is adapted to identify contents of the received service information, obtain contents to be converted in the service information, and sends a content conversion request to the content processing device 302. The content processing device 302 is adapted to query a preset mapping relation between the contents to be converted and a content conversion rule according to the content conversion request sent by the content identification device 301, obtain the content conversion rule corresponding to the contents to be converted, convert the contents to be converted into multimedia contents according to the content conversion rule, generate an MM from the multimedia contents and the remaining contents in the service information according to a preset format, and set a playback property of the MM to generate an MM to be sent. The service information may be an SM or an MM.

In the service-information conversion system in this embodiment, the content processing device 302 may include an obtaining module 303, a converting module 304, a generating module 305, and a setting module 306.

The obtaining module 303 is adapted to query a preset mapping relation between contents to be converted and a content conversion rule, so as to obtain a content conversion rule corresponding to the contents to be converted.

The converting module 304 is adapted to convert the contents to be converted into multimedia contents according to the content conversion rule.

The generating module 305 is adapted to generate an MM from the multimedia contents and the remaining contents in the service information according to the preset format.

The setting module 306 is adapted to set a playback property of the generated MM, so as to generate an MM to be sent.

Referring to FIG. 3 again, in this embodiment, the service-information conversion system may further include an MMSC 307 adapted to receive service information, forward the service information to the content identification device 301, and receive the MM to be sent returned by the content processing device 302 and forward the MM to be sent to a receiving terminal. In addition, the content processing device 302 may also send the MM to be sent to the MMSC 307 through the content identification device 301.

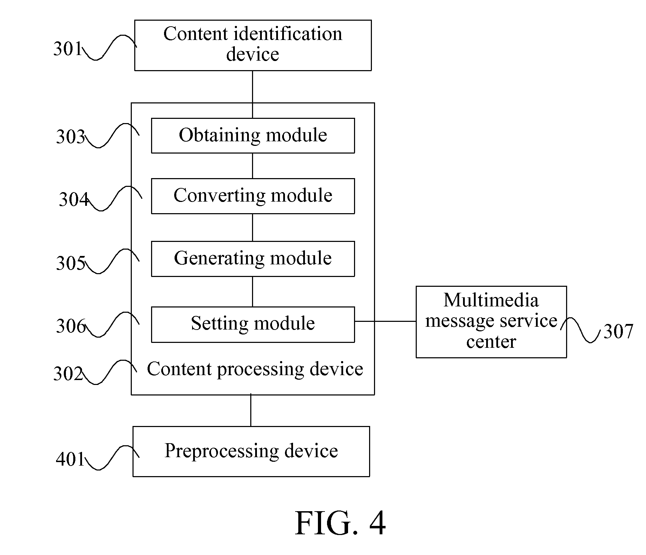

FIG. 4 is a schematic structural diagram of a second embodiment of a system for converting service information according to the invention. On the basis of the system for converting service information according to the embodiment shown in FIG. 3, a preprocessing device 401 is further added. The preprocessing device 401 is in communication with the content processing device 302, and is adapted to add content identifying information in the MM to be converted provided by the content processing device 302.

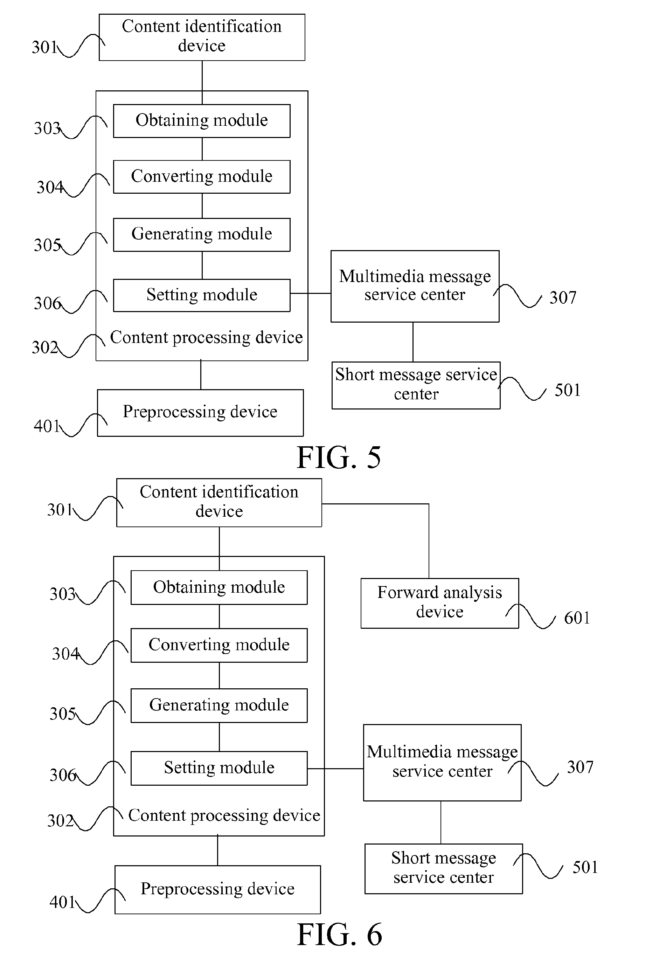

FIG. 5 is a schematic structural diagram of a third embodiment of a system for converting service information according to the invention. On the basis of the system for converting service information according to the embodiment shown in FIG. 4, an SMSC 501 is further added. The SMSC 501 is in communication with the MMSC 307, and is adapted to receive an SM and send the SM to the MMSC 307 according to an access code carried in the SM. In addition, the SMSC 501 may also be in communication with the content identification device 301 and send the received service information to be converted to the content identification device 301.

FIG. 6 is a schematic structural diagram of a fourth embodiment of a system for converting service information according to the invention. Compared with the embodiment in FIG. 5, the service-information conversion system in this embodiment further includes a forward analysis device 601. The forward analysis device 601 is adapted to obtain forwarding-related information of service information according to contents to be converted obtained by the content identification device 301, and provide feedback the forwarding-related information to the content identification device 301. The content processing device 302 is specifically adapted to query a preset mapping relation between the contents to be converted, the forwarding-related information and a content conversion rule according to a content conversion request sent by the content identification device 301, obtain the content conversion rule corresponding to the contents to be converted and the forwarding-related information, convert the contents to be converted into multimedia contents according to the content conversion rule, generate an MM from the multimedia contents and the remaining contents in the service information according to a preset format, and set a playback property of the MM to generate an MM to be sent. The service information may be an SM or an MM.

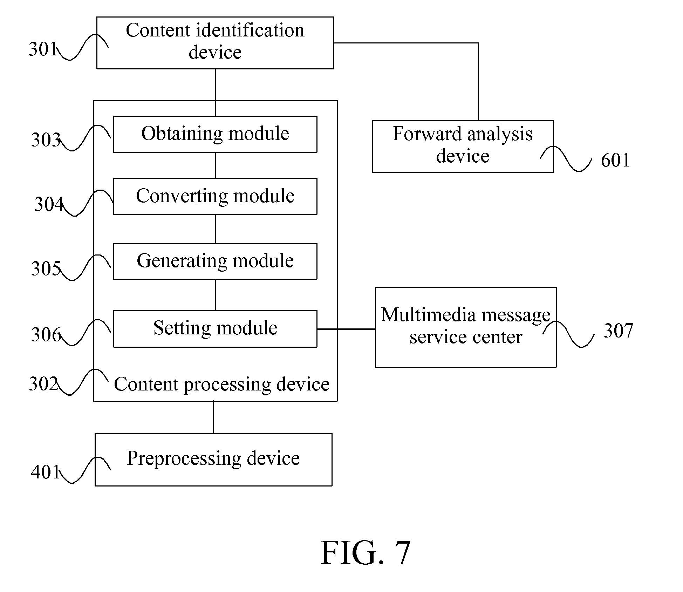

FIG. 7 is a schematic structural diagram of a fifth embodiment of a system for converting service information according to the invention. On the basis of the system for converting service information according to the embodiment in FIG. 4, a forward analysis device 601 is further added. Functions and connection relationships of the forward analysis device 601 are the same as those in FIG. 6.

In the embodiments of the disclosure, any two or more of the content identification device 301, the content processing device 302, the preprocessing device 401, and the forward analysis device 601 may be integrally disposed.

In addition, any service-information conversion system provided in the invention may further include a storage device. The storage device is in communication with the content processing device 302, and is adapted to store a preset mapping relation between contents to be converted and a content conversion rule. The content processing device 302 queries the preset the mapping relation between the contents to be converted and the content conversion rule in the storage device, obtains a content conversion rule corresponding to the contents to be converted, converts the contents to be converted into multimedia contents according to the content conversion rule, generates an MM from the multimedia contents and the remaining contents in the service information according to a preset format, and sets a playback property of the MM to generate an MM to be sent. If the mapping relation between the contents to be converted, the forwarding-related information and the content conversion rule is stored in the storage device, the content processing device 302 obtains the content conversion rule corresponding to the contents to be converted and the forwarding-related information, and converts the contents to be converted into multimedia contents according to the content conversion rule.

Furthermore, any service-information conversion system provided in the invention may further include a publishing device adapted to publish service information for a user to select and send.

In the embodiments of the invention, the contents to be converted and the content conversion rule of the service information are obtained from the service information. The contents to be converted in the service information are converted into multimedia contents according to the content conversion rule. An MM is generated from the multimedia contents and the remaining contents in the service information. The SM may be converted into an MM. The service information is no longer limited to an SM format, so that an expression manner of SM contents is effectively enriched. In addition, the conversion of an expression manner of MM contents may further be realized, so that the MM contents in the prior art may be converted into a richer and more vivid MM. When the service information is converted into an MM, the forwarding-related information of the service information is further utilized, thus realizing the personalized conversion of the service information.

Finally, it should be noted that the above embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in the embodiments, or equivalent replacements can be made to some technical features in the technical solutions, as long as such modifications or replacements do not depart from the scope of the present invention.

## Claims

1. A method for converting service information, **characterized by**:
receiving service information;
identifying contents of the service information and obtaining contents to be converted in the service information;
obtaining a content conversion rule corresponding to the contents to be converted according to a preset mapping relation between the contents to be converted and the content conversion rule;
converting the contents to be converted into multimedia contents according to the content conversion rule;
generating a multimedia message (MM) from the multimedia contents and the remaining contents in the service information according to a preset format, and setting a playback property of the MM to generate an MM to be sent.

2. The method of claim 1, wherein the service information is a short message (SM) to be converted and the contents to be converted in the service information are the keywords in the short message to be converted.

3. The method of claim 2, further comprising: presetting a mapping relation between the keywords and the content conversion rule.

4. The method of claim 2, wherein the service information is a multimedia message (MM) to be converted; and
the step of identifying contents of the service information comprises:
identifying contents of the MM to be converted according to the content identifying information carried in the MM to be converted.

5. The method of claim 4, wherein the content identifying information is watermark information and/or fingerprint information.

6. The method of claim 4, further comprising:
adding the content identifying information to the MM to be converted.

7. The method of any one of claims 1 to 6, further comprising:
obtaining the forwarding-related information of the service information.

8. The method of claim 7, wherein the forwarding-related information is the total number of times that the sender of the service information forwards the service information, and/or the total number of times that the SM is forwarded, and/or the number of times that the service information is forwarded in a certain period.

9. The method of claim 7, wherein the step of obtaining a content conversion rule corresponding to the contents to be converted according to a preset mapping relation between the contents to be converted and the content conversion rule comprises:
obtaining a content conversion rule corresponding to the contents to be converted and the forwarding-related information according to a mapping relation between the contents to be converted, the forwarding-related information and the content conversion rule.

10. A system for converting service information, **characterized by**:
a content identification device, adapted to identify contents of service information and obtain contents to be converted in the service information;
a content processing device, adapted to query a preset mapping relation between the contents to be converted and a content conversion rule, obtain the content conversion rule corresponding to the contents to be converted, convert the contents to be converted into multimedia contents according to the content conversion rule, generate an MM from the multimedia contents and the remaining contents in the service information according to a preset format, and set a playback property of the MM to generate an MM to be sent.

11. The system of claim 10, wherein the content processing device comprises:
an obtaining module, adapted to query a preset mapping relation between contents to be converted and a content conversion rule, so as to obtain a content conversion rule corresponding to the contents to be converted;
a converting module, adapted to convert the contents to be converted into multimedia contents according to the content conversion rule;
a generating module, adapted to generate an MM from the multimedia contents and the remaining contents in the service information according to the preset format;
a setting module, adapted to set a playback property of the generated MM to generate an MM to be sent.

12. The system of claim 10, further comprising:
a multimedia message service center (MMSC), adapted to receive service information, forward the service information to the content identification device, and send the MM to be sent returned by the content processing device to a receiving terminal.

13. The system of claim 12, wherein the service information is a short message to be converted or an MM to be converted.

14. The system of claim 13, further comprising:
a preprocessing device, adapted to add content identifying information in the MM to be converted.

15. The system of claim 13, further comprising:
a short message service center (SMSC), adapted to receive the short message to be converted and forward the short message according to an access code carried in the short message.

16. The system of any one of claims 10 to 15, further comprising:
a forward analysis device, adapted to obtain forwarding-related information according to contents to be converted;
the content processing device is correspondingly adapted to query a preset mapping relation between the contents to be converted, the forwarding-related information and a content conversion rule, obtain the content conversion rule corresponding to the contents to be converted and the forwarding-related information, convert the contents to be converted into multimedia contents according to the content conversion rule, generate an MM from the multimedia contents and the remaining contents in the service information according to a preset format, and set a playback property of the MM to generate an MM to be sent.

17. The system of claim 16, wherein any two or more of the content identification device, the content processing device, the preprocessing device, and the forward analysis device are integrally disposed.

18. The system of any one of claims 10 to 15, further comprising:
a storage device, adapted to store a preset mapping relation between contents to be converted and a content conversion rule;
The content processing device is correspondingly adapted to query the preset mapping relation between the contents to be converted and the content conversion rule in the storage device, obtain a content conversion rule corresponding to the contents to be converted, convert the contents to be converted into multimedia contents according to the content conversion rule, generate an MM from the multimedia contents and the remaining contents in the service information according to a preset format, and set a playback property of the MM to generate an MM to be sent.

19. The system of any one of claims 10 to 15, further comprising:
a publishing device, adapted to publish service information;
the content identification device is correspondingly adapted to obtain the contents to be converted according to contents of the service information published by the publishing device.
